# EUROPÄISCHE PATENTSCHRIFT

(11) **EP 2 886 271 B1**
(45) Veröffentlichungstag und Bekanntmachung des Hinweises auf die Patenterteilung: **17.10.2018**
(21) Anmeldenummer: 14192948.9
(22) Anmeldetag: 13.11.2014
(51) Int. Cl.: B27B 19/00, B23D 51/16

(54) **Oszillationsantrieb**
Oscillation drive
Commande par oscillation

(30) Priorität: 25.11.2013 DE 102013113008
(43) Veröffentlichungstag der Anmeldung: 24.06.2015
(73) Patentinhaber: C. & E. Fein GmbH, 73529 Schwäbisch Gmünd-Bargau (DE)
(72) Erfinder: Bek, Fabian, 73560 Böbingen (DE); Blickle, Jürgen, 73035 Göppingen (DE)
(74) Vertreter: Roos, Michael

(56) Entgegenhaltungen:
- EP-A1- 2 594 364
- EP-A2- 0 829 237
- WO-A1-2012/151122
- WO-A2-2012/170459
- CH-A5- 685 154
- DE-A1-102006 022 804
- US-A- 5 205 043
- US-A1- 2008 027 449

## Beschreibung

Die Erfindung betrifft einen Oszillationsantrieb mit einem Gehäuse, in dem ein Antriebsmotor zum rotierenden Antrieb einer Motorwelle und eine Werkzeugspindel aufgenommen sind, sowie ein erster Koppeltrieb, der mit der Motorwelle und der Werkzeugspindel zum oszillierenden Antrieb der Werkzeugspindel um ihre Längsachse gekoppelt ist, sowie ein zweiter Koppeltrieb, der mit der Werkzeugspindel gekoppelt ist.

Ein derartiger Oszillationsantrieb ist aus der WO2012/151122 und aus der EP 2 594 364 A1 bekannt.

Mit Oszillationsantrieben bekannter Bauart lassen sich kraftgetriebene Handwerkzeuge antreiben, um die verschiedenartigsten Aufgaben zu erledigen, wozu insbesondere Sägeaufgaben, Schneidaufgaben und Schleifaufgaben gehören. Oszillationsantriebe sind üblicherweise dazu ausgebildet, ein Werkzeug mit einer hohen Oszillationsfrequenz, etwa im Bereich zwischen 5.000 Oszillationen pro Minute und 30.000 Oszillationen pro Minute (gemessen von Umkehrpunkt zu Umkehrpunkt), bei geringem Verschwenkwinkel, etwa im Bereich zwischen 0,5° und 7°, anzutreiben. Hierdurch kann eine hochpräzise Bearbeitung von Werkstücken ermöglicht werden. Das oszillierend angetriebene Werkzeug erzeugt bei der Bearbeitung der Werkstücke nur geringe Reaktionskräfte bzw. Gegenmomente, die ein den Oszillationsantrieb führender Bediener auffangen muss. Verglichen etwa mit rotatorisch angetriebenen Sägewerkzeugen, etwa Kreissägen, bergen oszillatorisch angetriebene Sägeblätter für den Benutzer eine signifikant geringere Verletzungsgefahr. Außerdem können mit länglichen Sägeblättern Tauchschnitte insbesondere in Werkstücken aus Holz, GfK, Gips oder dergleichen eingebracht werden, was mit rotierend angetriebenen Werkzeugen nur bedingt möglich ist.

Allerdings besteht bei der Einbringung von Tauchschnitten das Problem, dass die Spanräume sich schnell mit Sägemehl zusetzen. Außerdem wird das Sägeblatt, das seitlich nicht schneidet, sondern nur oszilliert, beim Tauchschnitt seitlich eingezwängt und so am Schwingen gehindert. Die Oszillation verlagert sich so in das Getriebe, in die Aufnahme und das Sägeblatt selbst und belastet die Teile durch elastische Verformung bzw. wird in Reibungswärme umgewandelt. Im Extremfall bleibt das Sägeblatt ganz stehen und die Maschine bewegt sich hin und her.

Bei der eingangs genannten EP 2 594 364 A1 ist der Oszillationsantrieb mit zwei Exzenterkoppelmechanismen versehen, wodurch die Oszillationsbewegung der Werkzeugspindel mit richtungsabhängiger Auslenkung erfolgen soll. Dies bedeutet, dass je nach Auslegung der beiden Exzenterkoppelmechanismen und je nach Schaltung der Freiläufe entweder eine herkömmliche Oszillation der Werkzeugspindel erfolgt, bei der diese alternierend mit demselben Winkel vor- und zurückgeschwenkt wird, oder dass ein oszillierend in einer Drehrichtung ansteigender Drehfortschritt erzielt werden kann. In jedem Falle handelt es sich jedoch um eine Oszillation um eine gerätefeste Schwenkachse.

Auch bei einer derartigen Ausführung bestehen nach wie vor die oben beschriebenen Probleme.

Aus der WO 2012/151122 A1 ist ferner eine chirurgische Säge bekannt, bei der ein Sägeblatt mit mehreren länglichen, zueinander winklig angeordneten Schlitzen von einem Antrieb mit mehreren Antriebsstutzen angetrieben wird, die in die Schlitze des Sägeblatts eingreifen. Auf diese Weise führt das Sägeblatt eine überlagerte Bewegung aus, wenn die Antriebsstutzen rotierend angetrieben werden, die in die Schlitze des Sägeblatts eingreifen.

Mit einer derartigen Ausführung kann zwar eine überlagerte Bewegung des Sägeblatts erreicht werden, allerdings ergibt sich ein hoher Verschleiß des Sägeblatts und der Antriebsstutzen auf Grund der schleifenden Bewegung der Antriebsstutzen innerhalb der Schlitze. Außerdem ist wegen der losen Kopplung zwischen dem Sägeblatt und dem Antrieb keine hochpräzise Führung des Sägeblatts gewährleistet.

Aus der WO 2012/170459 A3 ist eine weitere chirgurgische Säge ähnlicher Art bekannt, bei der ein Sägeblatt innnerhalb eines Halters eines Antriebs längsverschieblich aufgenommen ist und mittels zweier in einen Schltz des Sägblatts eingreifender Stifte zusätzlich in einer Querrichtung antreibbar ist. Zwar lässt sich auch auf diese Weise eine überlagerte Bewegung des Sägeblatts erzeugen, jedoch ergiben sich ein komplizierter Aufbau des Sägeblatts und ein hoher Verschleiß des Sägeblatts und des Halters auf Grund der schleifenden Bewegung.

Vor diesem Hintergrund liegt der Erfindung die Aufgabe zugrunde, einen verbesserten Oszillationsantrieb zu offenbaren, der eine verbesserte Schnittleistung insbesondere beim Sägen von Werkstücken, insbesondere bei der Erzeugung von Tauchschnitten, ermöglicht, wobei ein Verschleiß des Sägeblatts durch die Antreibsbewegung vermieden werden soll.

Diese Aufgabe wird erfindungsgemäß bei einem Oszillationsantrieb gemäß der eingangs genannten Art dadurch gelöst, dass der zweite Koppeltrieb derart mit der Werkzeugspindel gekoppelt ist, dass die Werkzeugspindel eine Überlagerungsbewegung aus oszillierender und senkrecht zur Längsachse gerichteter Bewegung ausführt.

Die Aufgabe der Erfindung wird auf diese Weise gelöst.

Da die Werkzeugspindel erfindungsgemäß entgegen dem Stand der Technik nicht gerätefest an einem vorbestimmten Ort des Gehäuses verbleibt, sondern zusätzlich eine senkrecht zur Längsachse gerichtete Bewegung ausführt, ergibt sich zusätzlich zu der Drehoszillationsbewegung der Werkzeugspindel eine überlagerte Bewegung, die zur Spanabfuhr genutzt werden kann. Je nach Art der zweiten überlagerten Bewegung, die mittels des zweiten Koppeltriebes erzeugt wird, sowie in Abhängigkeit von der geometrischen Auslegung des zweiten Koppeltriebes im Verhältnis zur geometrischen Ausgestaltung des ersten Koppeltriebes lassen sich überlagerte Bewegungen des Werkzeugs erzeugen, die in weiten Grenzen variiert und an die jeweilige Bearbeitungsaufgabe angepasst werden können. Somit lässt sich eine Anpassung etwa an spezifische Sägeaufgaben, Schneidaufgaben und Schleifaufgaben ermöglichen.

Da das Werkzeug an der Werkzeugspindel befestigt ist, ist ein Verschleiß des Werkzeugs durch schleifende Antriebsbewegungen ausgeschlossen.

Vorzugsweise ist hierbei die Werkzeugspindel in einer zu ihrer Längsachse senkrechten Ebene periodisch verlagerbar.

Dadurch lassen sich besonders vorteilhafte resultierende Bewegungen des Werkzeugs erreichen.

Gemäß einer weiteren Ausgestaltung der Erfindung ist der zweite Koppeltrieb dazu ausgebildet, die Werkzeugspindel in der zu ihrer Längsachse senkrechten Ebene exzentrisch um eine gehäusefeste Mittelachse herum zu verlagern.

Durch eine derartige Bewegung der Werkzeugspindel exzentrisch um eine Mittelachse herum lassen sich bestimmte resultierende Bewegungen der Werkzeugspindel bzw. eines daran aufgespannten Werkzeuges erzeugen, die zur Lösung bestimmter Aufgaben besonders vorteilhaft sind. Insbesondere kommt hierbei die Erzeugung eines Tauchschnitts in Betracht.

Um die Werkzeugspindel in der zu ihrer Längsachse senkrechten Ebene exzentrisch um eine Mittelachse herum zu verlagern, ist es beispielsweise möglich, die Werkzeugspindel in einer Hohlwelle zu lagern, die über einen Exzenter rotierend antreibbar ist.

Hierbei kann die Werkzeugspindel vorzugsweise in einer Hohlwelle drehbar gelagert sein, die als Exzenterring ausgebildet ist, innerhalb dessen die Werkzeugspindel drehbar gelagert ist, und dessen bezüglich der Werkzeugspindel exzentrisch verlaufende Außenoberfläche in Lagern am Gehäuse drehbar gelagert ist.

Zum Antrieb kann etwa ein Riementrieb, vorzugsweise ein Zahnriementrieb, verwendet werden, der seinerseits von der Motorwelle angetrieben wird.

Obwohl grundsätzlich auch ein separater Antrieb für den Exzenterring denkbar ist, ergibt sich auf diese Weise eine einfach von dem rotierenden Antrieb der Motorwelle abgeleitete Bewegung.

Gemäß einer weiteren Variante der Erfindung ist der zweite Koppeltrieb dazu ausgebildet, die Werkzeugspindel bezüglich einer zur Werkzeugspindel parallelen Schwenkachse oszillierend zu verschwenken.

Auf diese Weise wird der ersten Oszillationsbewegung der Werkzeugspindel, die vom ersten Koppeltrieb erzeugt wird, eine zweite Oszillationsbewegung überlagert, so dass sich ein sehr komplexer Bewegungsablauf ergeben kann. Je nach Beabstandung zwischen Schwenkachse und Längsachse der Werkzeugspindel und je nach Richtung der ersten Oszillationsbewegung und der zweiten Oszillationsbewegung und je nach der verwendeten Geometrie lassen sich hierbei spezielle Bewegungen des Werkzeugs erzeugen, die für bestimmte Arbeitsaufgaben besonders vorteilhaft sind.

Hierzu kann die Werkzeugspindel etwa an einem Schwenkhebel gelagert sein, der um eine gehäusefeste Schwenkachse oszillierend verschwenkbar ist.

Zum Antrieb des Schwenkhebels kann ein Nockentrieb vorgesehen sein, der an seinem der Werkzeugspindel abgewandten Ende von der Motorwelle oszillierend angetrieben ist.

Auf diese Weise kann die Antriebsbewegung zur Erzeugung der oszillierenden Verschwenkung der Werkzeugspindel um die Schwenkachse des Schwenkhebels auf einfache Weise unmittelbar von der Antriebsbewegung der Motorwelle abgeleitet werden.

Vorzugsweise wird hierbei der Schwenkhebel über einen von der Motorwelle angetriebenen Nocken bewegt, wobei eine Rückstellfeder zur Rückstellung des Schwenkhebels in Gegenrichtung vorgesehen ist.

Hierbei sollte die Rückstellfeder ausreichend stark bemessen werden, um in jeder Phase der Schwenkbewegung ein Abheben vom Nocken zu vermeiden.

In alternativer Ausführung der Erfindung kann der Schwenkhebel grundsätzlich auch über einen von der Motorwelle angetriebenen Exzenterkoppeltrieb angetrieben sein.

Gemäß einer weiteren Variante der Erfindung ist der zweite Koppeltrieb dazu ausgebildet, die Werkzeugspindel in einer zu ihrer Längsachse senkrechten Ebene translatorisch in einer Richtung hin- und her zu bewegen.

Auch mit einer derartigen Verlagerung der Werkzeugspindel lediglich in einer Richtung hin und her lässt sich in Kombination mit der vom ersten Koppeltrieb erzeugten Oszillationsbewegung der Werkzeugspindel ein gutes Arbeitsergebnis erzeugen. Auch hierbei können die geometrischen Parameter an die gewünschte Arbeitsaufgabe speziell angepasst werden.

Gemäß einer weiteren Ausgestaltung der Erfindung ist eine Schalteinrichtung zur wahlweisen Zuschaltung des zweiten Koppeltriebs vorgesehen.

Auf diese Weise besteht die Möglichkeit, den Oszillationsantrieb entweder in herkömmlicher Weise nur unter Verwendung des ersten Koppelantriebs zu verwenden oder aber eine überlagerte Oszillationsbewegung zu nutzen, die aus der Kombination der beiden Bewegungen des ersten Koppeltriebs und des zweiten Koppeltriebs resultiert.

Anstelle einer Erzeugung der Bewegung des zweiten Koppeltriebs auf rein mechanische Weise etwa mittels eines Nockentriebs, eines Exzentertriebs oder dergleichen kann auch mindestens ein Aktuator zum Antrieb des zweiten Koppeltriebs vorgesehen sein.

Hierzu kann der Aktuator etwa mittels eines Piezoelementes, eine Nanotubeelementes oder eines Fluidelementes angetrieben werden.

Durch die Verwendung eines Aktuators zum Antrieb des zweiten Koppeltriebs kann dieser praktisch frei von den üblichen Restriktionen eines mechanischen Koppeltriebs ausgestaltet sein und kann auf einfache Weise schalt- und steuerbar sein. Auf diese Weise lassen sich spezielle Anforderungen an die resultierende Bewegung der Werkzeugspindel erfüllen. Gleichzeitig besteht eine besonders hohe Flexibilität in Bezug auf die Dimensionierung und Ausgestaltung des zweiten Koppeltriebs.

Vorzugsweise ist mindestens ein Aktuator vorgesehen, um eine Verlagerung der Werkzeugspindel in einer ersten zu ihrer Längsachse senkrechten Ebene translatorisch zu erlauben. Wird zusätzlich hierzu mindestens ein weiterer Aktuator vorgesehen, der eine zu der ersten Translationsrichtung abweichende Translationsbewegung, vorzugsweise senkrecht zur ersten Translationsbewegung, ermöglicht, so lassen sich beliebige, auch sehr komplexe Verlagerungsbewegungen der Werkzeugspindel bezüglich einer gehäusefesten Mittelachse erzielen.

Jeder der verwendeten Aktuatoren kann grundsätzlich in beliebiger Weise ausgestaltet sein. Bevorzugt ist eine Ausgestaltung eines Aktuators, der mittels eines Piezoelementes, Nanotubeelementes oder eines Fluidelementes angetrieben wird. Während ein Piezoelement eine sehr einfache und kostengünstige Umsetzung eines Spannungssignals in eine Bewegung des Aktuators ermöglicht, lasse sich mit Nanotubeelementen sehr spezielle Anforderungen an die Auslenkung und Kraftübertragung, an das Frequenzverhalten usw. erfüllen.

Bei der Ausgestaltung des Aktuators mittels eines Fluidelementes lassen sich weitere Anforderungen erfüllen und gegebenenfalls eine spezielle Dämpfungscharakteristik gewährleisten.

Die geometrische Abstimmung zwischen dem ersten Koppeltrieb und dem zweiten Koppeltrieb kann in weiten Grenzen variiert werden.

So kann der erste Koppeltrieb mit einer ersten Frequenz und der zweite Koppeltrieb mit einer zweiten Frequenz angetrieben sein, wobei das Verhältnis zwischen der ersten Frequenz und der zweiten Frequenz in einem Bereich von 0,01 bis 100 liegt, vorzugsweise in einem Bereich von 0,1 bis 10, weiter bevorzugt in einem Bereich von 0,5 bis 5, besonders bevorzugt in einem Bereich von 0,5 bis 1,5.

Weiterhin kann auch das Verhältnis zwischen einer Amplitude der Oszillationsbewegung des ersten Koppeltriebs und einer Amplitude einer Oszillationsbewegung des zweiten Koppeltriebs in weiten Grenzen variiert werden und liegt vorzugsweise in einem Bereich von 0,1 bis 10. Dabei ist die Amplitude jeweils an der Werkzeugschneide gemessen.

Gemäß einer weiteren Ausgestaltung der Erfindung ist zumindest das Verhältnis zwischen der ersten Frequenz und der zweiten Frequenz, oder das Verhältnis zwischen einer Amplitude der Oszillationsbewegung des ersten Koppeltriebs und einer Amplitude der Oszillationsbewegung des zweiten Koppeltriebs, oder eine Phasenlage zwischen den beiden Bewegungen einstellbar.

Auf diese Weise kann die resultierende Bewegung der Werkzeugspindel an spezielle Anforderungen im Betrieb angepasst werden. Hierzu können bestimmte Voreinstellungen gespeichert sein und etwa auf Knopfdruck abrufbar sein. Besonders flexibel lässt sich eine derartige Ausgestaltung dann realisieren, wenn die Bewegungen des zweiten Koppeltriebs mittels Aktuatoren erzielt werden können.

Alternativ kann die zusammengesetzte Bewegung aus Drehoszillation und senkrecht zur Drehachse orientierter Bewegung auch durch Verwendung einer geeigneten Kulissenführung erzeugt werden.

Um Tauchschnitte in Werkstücken unter Verwendung des vorstehend bestehenden Oszillationsantriebes erzeugen zu können, wird vorteilhaft ein bestimmtes Sägeblatt verwendet, das eine Verzahnung aufweist, die sich entlang einer geraden Linie erstreckt, wobei an jedem Ende ein Eckzahn vorgesehen ist, der in beide Schnittrichtungen angeschärft ist.

Auf diese Weise kann ein besonders gutes Schneidverhalten bei Tauchschnitten erreicht werden, wenn die überlagerte Bewegung der Werkzeugspindel, die das Sägeblatt antreibt, derart ausgestaltet ist, dass mit den Eckzähnen eine Art Hobelbewegung erzielbar ist. Hierdurch kann eine deutliche Verbesserung der Schneidleistung erzielt werden.

Es versteht sich, dass die vorstehend genannten und die nachstehend noch zu erläuternden Ausführungsbeispiele der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine perspektivische Darstellung einer ersten Ausführung einer erfindungsgemäßen Werkzeugmaschine mit einem Oszillationsantrieb und einem daran aufgenommenen Sägewerkzeug;
- Fig. 2: einen vereinfachten Schnitt durch das Oszillationsgetriebe gemäß Fig. 1 in vergrößerter Darstellung;
- Fig. 3: einen Schnitt durch das Oszillationsgetriebe in einer gegenüber der Ausführung gemäß Fig. 2 abgewandelten Ausführung;
- Fig. 4: einen Schnitt durch eine weitere Abwandlung eines gegenüber der Ausführung gemäß Fig. 2 abgewandelten Oszillationsgetriebes;
- Fig. 5: eine Darstellung der resultierenden Bewegung einer Sägezahnspitze eines auf der Werkzeugspindel montierten Sägeblattes bei Verwendung eines ersten Satzes von geometrischen Parametern und bei einer Ausgestaltung des Oszillationsgetriebes gemäß Fig. 2;
- Fig. 6: eine Darstellung der resultierenden Bewegung einer Sägezahnspitze eines auf der Werkzeugspindel montierten Sägeblattes bei leicht gegenüber der Ausführung gemäß Fig. 5 abgewandelten Parametern;
- Fig. 7: eine Darstellung der resultierenden Bewegung einer Sägezahnspitze eines auf der Werkzeugspindel montierten Sägeblattes bei weiter gegenüber der Ausführung gemäß Fig. 5 abgewandelten Parametern;
- Fig. 8: eine Prinzipdarstellung, die ein Tauchsägeblatt zeigt, das an einem Oszillationsantrieb gemäß Fig. 1 in einer Winkellage von 0° zur Maschinenlängsachse befestigt ist, im Einsatz bei einem Tauchsägeschnitt, wobei Fig. 8a) eine Aufsicht auf den Getriebekopf der Werkzeugmaschine von oben zeigt und Fig. 8b) eine Teilansicht des Sägeblattes bei einem Tauchschnitt in einem Werkstück zeigt; und
- Fig. 9: verschiedene Phasen der Schnittbewegung des Tauchsägeblattes gemäß Fig. 8b), in den Phasen I, II, III und IV (halber Zyklus).

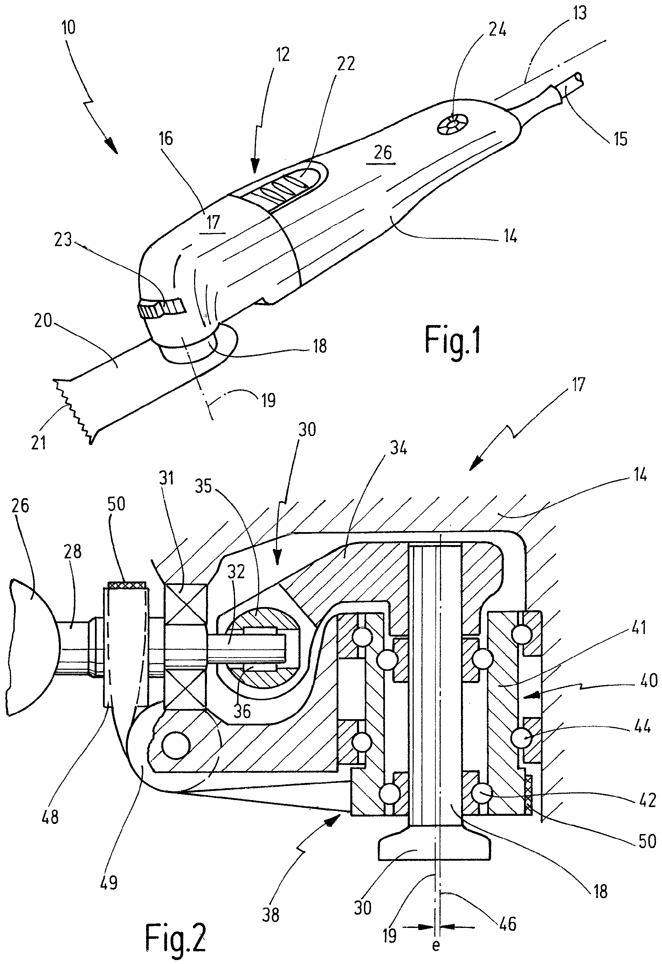

Fig. 1 zeigt eine erfindungsgemäße Werkzeugmaschine, die insgesamt mit der Ziffer 10 bezeichnet ist. Die Werkzeugmaschine 10 ist als handgehaltene Werkzeugmaschine ausgebildet und weist einen Oszillationsantrieb 12 auf, an dem ein Werkzeug 20 befestigt ist. Der Oszillationsantrieb 12 weist ein längliches Gehäuse 14 auf, an dessen hinterem Ende ein Netzanschlusskabel 15 vorgesehen ist. Im hinteren Bereich des Gehäuses 14 ist ein Motor aufgenommen, der lediglich mit der Ziffer 26 angedeutet ist, wobei es sich vorzugsweise um einen Universalmotor handelt. Im vorderen Bereich des Gehäuses 14 ist ein Getriebekopf 16 vorgesehen, in dem ein Oszillationsgetriebe 17 aufgenommen ist. Aus dem Getriebekopf 16 steht eine Werkzeugspindel 18 nach außen hervor. Hierbei verläuft eine Längsachse 19 der Werkzeugspindel 18 senkrecht zu einer Längsachse 13 des Gehäuses 14. Am äußeren Ende der Werkzeugspindel 18 ist das Werkzeug 20 befestigt, wobei es sich im dargestellten Fall um ein längliches Sägeblatt mit einer geraden Verzahnung 21 handelt, das zur Erzeugung von Tauchschnitten geeignet ist.

Am vorderen Ende des Getriebekopfes 16 ist ferner noch ein Schalter 23 erkennbar, mit dem sich das Oszillationsgetriebe 17 in später noch beschriebener Weise umschalten lässt. Am dem Netzanschlusskabel 15 zugewandten Ende des Gehäuses 14 ist ferner noch ein Stellknopf 24 angedeutet, mit dem sich bestimmte Parameter des Oszillationsgetriebes 17 einstellen lassen.

Es versteht sich, dass der Ein-/Aus-Schalter 23 und der Stellknopf 24 lediglich rein optionaler Natur sind. Gleichermaßen versteht es sich, dass die Werkzeugmaschine 10 auch als akkubetriebenes Gerät ausgeführt sein kann.

Eine erste Ausführung eines erfindungsgemäßen Oszillationsantriebs 12 wird nachfolgend anhand von Fig. 2 näher erläutert. Das Oszillationsgetriebe 17 besteht hierbei aus einem ersten Koppeltrieb 30 und einem zweiten Koppeltrieb 38, über die eine resultierende Antriebsbewegung der Werkzeugspindel 18 erzeugt wird.

Der erste Koppeltrieb 30 ist als Exzenterkoppeltrieb grundsätzlich bekannter Bauart ausgebildet. Eine Motorwelle 28 des Motors 26 ist mitttels eines Lagers 31 am Gehäuse 14 drehbar gelagert. Ein von der Motorwelle 28 angetriebener Exzenter 32 treibt die Werkzeugspindel 16 über eine drehfest mit der Werkzeugspindel 18 verbundene Exzentergabel 34 an, die über ein Exzenterlager 35 vom Exzenter 32 oszillierend bewegt wird. Das Exzenterlager 35 ist ballig ausgebildet und greift über ein Nadellager 36 am Exzenter 32 an. Die Exzentergabel 34 umgibt das Exzenterlager 35 beidseitig und erzeugt eine oszillierende Antriebsbewegung der Werkzeugspindel 18 mit geringem Verschwenkwinkel (etwa 0,5° bis 7°, jeweils gemessen von Umkehrpunkt zu Umkehrpunkt) und hoher Frequenz (etwa 5.000 Oszillationen pro Minute bis 30.000 Oszillationen pro Minute). Derartige Exzenterkoppeltriebe sind grundsätzlich im Stand der Technik bekannt und werden verwendet, um die Werkzeugspindel eines Oszillationsantriebs um ihre Längsachse mit einer Drehoszillationsbewegung anzutreiben.

Gemäß der vorliegenden Erfindung ist zusätzlich zum ersten Koppeltrieb 30 ein zweiter Koppeltrieb 38 vorgesehen, der die Werkzeugspindel 18 zusätzlich in einer Ebene senkrecht zur Längsachse 19 der Werkzeugspindel 18 periodisch verlagert. Im hier anhand von Fig. 2 beschriebenen Fall wird die Werkzeugspindel um eine gehäusefeste Mittelachse 46 mit einer Exzentrität e kreisend herum bewegt.

Die Werkzeugspindel 18 ist hierzu in einer Hohlwelle 40 drehbar gelagert, die einen Exzenterring 41 aufweist. Die Werkzeugspindel 18 kann innerhalb der Innenoberfläche des Exzenterrings 41 mittels zweier innerer Lager 42 drehoszillierend bewegt werden. Der Außenumfang des Exzenterrings 41 ist gegenüber der Längsachse 19 der Werkzeugspindel 18 versetzt angeordnet. Eine Mittelachse 46 des Exzenterrings 41 ist somit um die Exzentrität e gegenüber der Längsachse 19 der Werkzeugspindel 18 versetzt. Der Exzenterring 41 ist mittels äußerer Lager 44 am Gehäuse 14 drehbar gelagert. Der Exzenterring 41 wird mittels eines Riementriebes von der Motorwelle 28 rotierend angetrieben. Ein Riemen 50, etwa in Form eines Zahnriemens, läuft hierzu über eine Riemenscheibe 48 auf der Motorwelle 28 und ist mittels Rollen 49 zweifach umgelenkt. Der Riemen 50 ist unmittelbar über die Außenoberfläche des Exzenterrings 41 geführt und treibt somit den Exzenterring 41 rotierend um seine Mittelachse 46 an.

Dadurch wird die Werkzeugspindel 18 mittels einer gleichmäßigen Exzentrität e kreisend um die Mittelachse 46 herum bewegt. Das Exzenterlager 35 ist derart ausgestaltet, dass die betreffende Axialverschiebung des Exzenterlagers 35 auf dem Exzenter 32 ohne Weiteres ermöglicht ist.

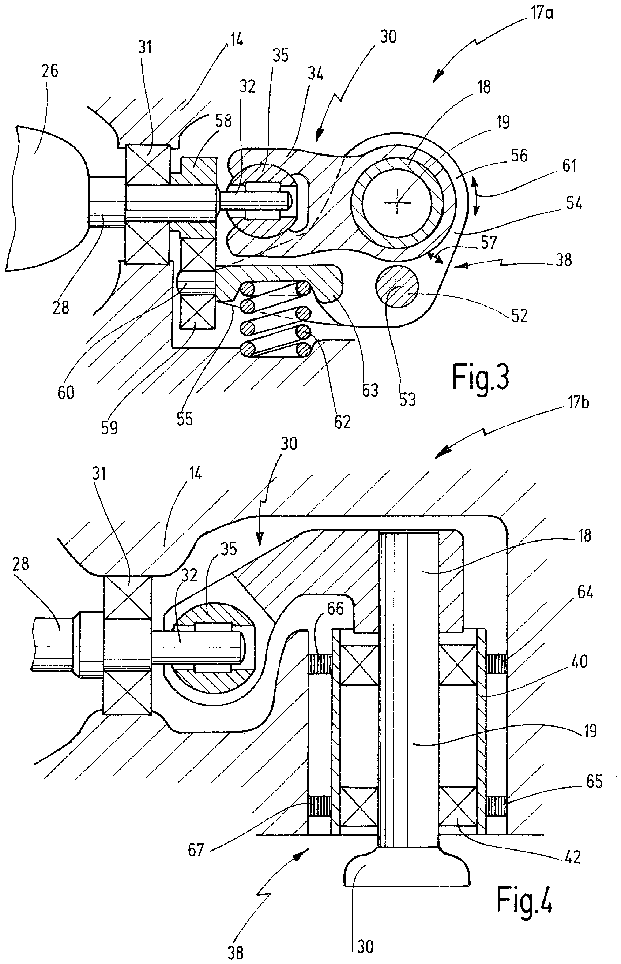

Fig. 3 zeigt eine abgewandelte Ausführung des Oszillationsgetriebes, das insgesamt mit der Ziffer 17a bezeichnet ist. In dieser Figur als auch in den nachfolgenden Figuren werden für entsprechende Teile entsprechende Bezugsziffern verwendet.

Der zweite Koppeltrieb 38 ist derart ausgestaltet, dass die vom ersten Koppeltrieb 30 oszillierend angetriebene Werkzeugspindel 18 mittels eines Schwenkhebels 54 zusätzlich um eine Schwenkachse 53 herum oszillierend verschwenkt wird. Ist an der Werkzeugspindel 18 gemäß Fig. 1 ein Werkzeug 20 in Form des dort dargestellten länglichen Sägeblatts befestigt, so hängt die resultierende Bewegung des Werkzeugs 20 und insbesondere der Verzahnung 21 natürlich von der Einspannrichtung des Werkzeugs 20 in Bezug auf die Längsachse 13 des Oszillationsantriebs 12 ab.

Im vorliegenden Fall gemäß Fig. 3 entspricht der Aufbau des ersten Koppeltriebs 30 dem zuvor beschriebenen Aufbau gemäß Fig. 2. Dagegen ist der zweite Koppeltrieb 38 derart ausgeführt, dass sich auch hiermit eine Oszillationsbewegung erzeugen lässt.

Der zweite Koppeltrieb 38 weist den Schwenkhebel 54 auf, der auf einer Schwenkwelle 52 um die Schwenkachse 53 herum oszillierend verschwenkbar antreibbar ist, wie durch einen Pfeil 57 angedeutet ist. Der Schwenkhebel 54 weist ein erstes Ende 55 auf, das mittels eines Nockentriebs oszillierend verschwenkt wird. Am zweiten Ende 56 des Schwenkhebels 54 ist die Werkzeugspindel 18 mittels eines Lagers (nicht dargestellt) aufgenommen.

Die Motorwelle 28 des Motors 26 ist mittels eines Lagers 31 am Gehäuse 14 gelagert. Auf der Motorwelle 28 sitzt ein Nockenring 58, der über ein daran abrollendes Lager 59 einen Zapfen 60 bewegt, der am ersten Ende 55 des Schwenkhebels 54 ausgebildet ist. Das Lager 59 wird über den Zapfen 60 mittels einer Feder 62 an den Nocken 58 angedrückt. Die Feder 62 ist zwischen dem Gehäuse 14 und einer Federaufnahme 63 am Schwenkhebel 54 eingeschlossen. Bei der Feder 62 handelt es sich um eine starke Schraubenfeder, die einen ausreichenden Andruck des Lagers 59 gegen den Nocken 58 in jedem Falle gewährleistet, so dass ein Abheben vom Nocken 58 unabhängig von der jeweiligen externen Belastung vermieden wird.

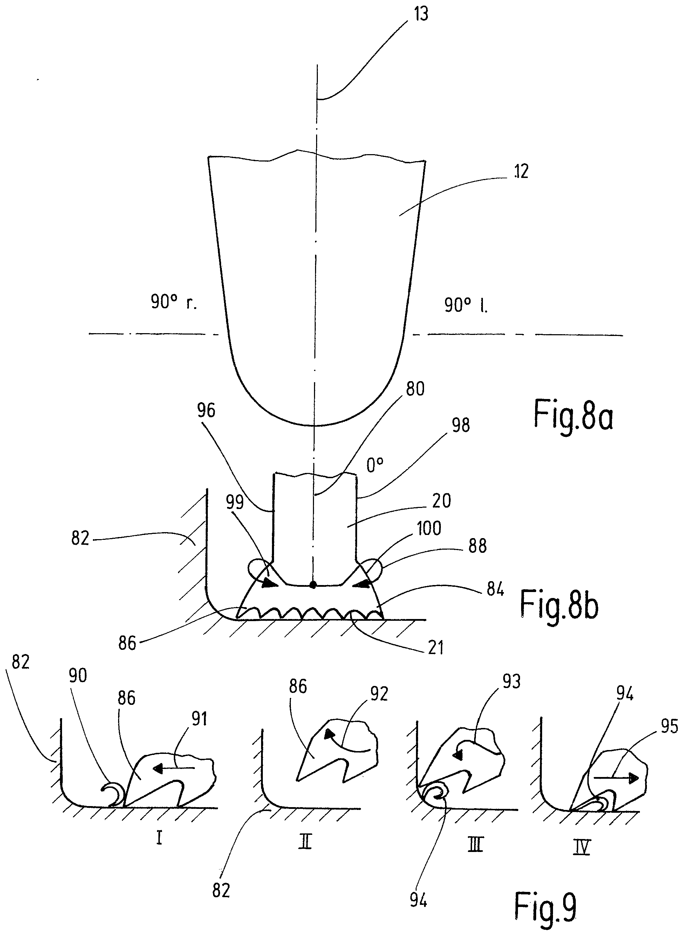

Bei der Ausführung gemäß Fig. 3 wird der oszillierenden Antriebsbewegung des ersten Koppeltriebs 30, die durch den Pfeil 61 angedeutet ist, zusätzlich eine Oszillationsbewegung der Werkzeugspindel 18 mittels des Schwenkhebels 54 überlagert, wie durch den Pfeil 57 angedeutet ist. Ist an der Werkzeugspindel 18 ein Werkzeug 20 derart befestigt, dass sich dieses gemäß der Darstellung in Fig. 1 etwa in Richtung der Längsachse 13 des Oszillationsantriebs 12 erstreckt, so ergibt sich an der Verzahnung 21 eine Bewegung, die zu einem oszillierenden Abheben von der Schnittstelle eines Werkstücks führt, wie im Folgenden noch anhand der Fig. 8 und 9 näher beschrieben wird.

Wird dagegen das Werkzeug 20 in anderer Richtung an der Werkzeugspindel 18 eingespannt, so ergibt sich ein deutlich geringerer Effekt der zweiten vom zweiten Koppeltrieb 38 erzeugten Oszillationsbewegung, da die Richtung der ersten Oszillationsbewegung des ersten Koppeltriebs 30 und der zweiten Oszillationsbewegung des zweiten Koppeltriebs 38 deutlich näher aneinander liegen als bei der anderen Einspannung des Werkzeuges 20.

Es versteht sich, dass das Exzenterlager 35 in der Lage sein muss, die vom Schwenkhebel 54 auf die Werkzeugspindel 18 übertragene Oszillationsbewegung in Axialrichtung auf den Exzenter 32 übertragen zu können.

Ggf. könnte auf der Motorwelle 28 auch ein Nockenring mit mehreren Nocken vorgesehen sein, um eine wirkungsvoll kombinierte Oszillationsbewegung auch dann zu gewährleisten, wenn das Werkzeug 20 anders eingespannt wird.

Eine weitere Ausführung eines erfindungsgemäßen Oszillationsgetriebes ist in Fig. 4 dargestellt und insgesamt mit Ziffer 17b bezeichnet.

Der Aufbau des ersten Koppeltriebs 30 entspricht hierbei dem Aufbau des ersten Koppeltriebs 30 gemäß Fig. 2. Dagegen ist der zweite Koppeltrieb 38 nicht mittels eines Riementriebs von der Motorwelle 28 angetrieben, sondern kann mittels Aktuatoren 64, 65, 66, 67, die an der Hohlwelle 40 angreifen, in einer Richtung senkrecht zur Längsachse 19 der Werkzeugspindel 18 bewegt werden.

Wiederum ist die Werkzeugspindel 18 mittels Lagern 42 innerhalb der Hohlwelle 40 drehbar gelagert. An der Außenoberfläche der Hohlwelle 40 greifen auf jeder Seite zwei Aktuatoren 64, 65 und 66, 67 an, die am Gehäuse 14 abgestützt sind. Bei den Aktuatoren kann es sich hierbei etwa um durch Piezoelemente angetriebene Aktuatoren handeln.

Werden etwa die Aktuatoren 65 und 65 mit einer Spannung beaufschlagt, die aktuell eine Verschiebung der Werkzeugspindel 18 nach links ergibt, und werden die Aktuatoren 66 und 67 auf der gegenüberliegenden Seite mit einer entsprechend gerichteten Spannung beaufschlagt, die eine entsprechende Kontraktion bewirkt, so wird die Hohlwelle 40 in diesem Moment nach links verschoben.

Durch eine entsprechende Änderung der Spannungssignale ergibt sich wiederum eine Bewegung in der Hohlwelle 40 in entgegengesetzter Richtung. So kann durch auf die Aktuatoren 64 bis 67 aufgeprägte oszillierende Spannungssignale die Werkzeugspindel 18 translatorisch hin und her oszillierend bewegt werden.

Werden entlang der Hohlspindel 40 weitere Aktuatoren vorgesehen, vorzugsweise senkrecht zur Zeichenebene in einer zu der Ebene, durch die die Aktuatoren 64 bis 67 verlaufen, senkrechten Ebene, so lässt sich der Werkzeugspindel 18 zusätzlich zur vom ersten Koppeltrieb 30 erzeugten Oszillationsbewegung eine beliebige Bewegung aufprägen, deren Phasenlage, Form und Amplitude in weiten Grenzen über die Aktuatoren 64 bis 67 und die zusätzlichen Aktuatoren in der weiteren Ebene beeinflusst werden kann.

Es versteht sich wiederum, dass das Exzenterlager 35 in der Lage sein muss, die durch die Verlagerung der Werkzeugspindel 18 erzeugte Axialbewegung ohne Verschleiß auf dem Exzenter 32 mitzumachen.

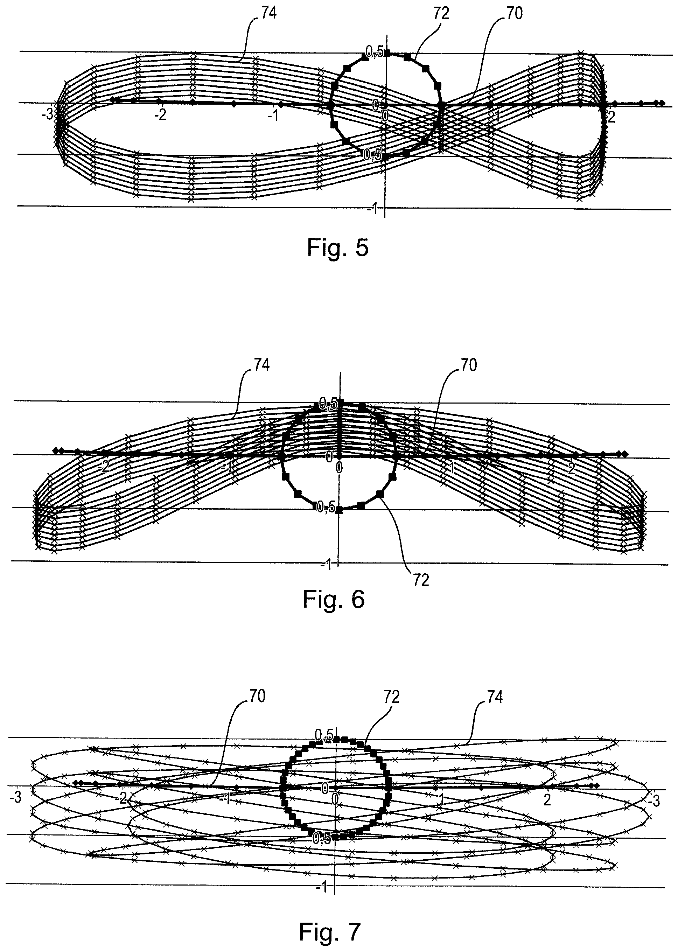

Anhand der Fig. 5 bis 7 werden nun verschiedene geometrische Ausgestaltungen des Oszillationsgetriebes 17 gemäß Fig. 2 näher erläutert.

Hierbei wird die Werkzeugspindel 18 über den zweiten Koppeltrieb 38 rotierend um die gerätefeste Mittelachse 46 herum bewegt. Diese Bewegung ist anhand der Kreislinie 72 mit verschiedenen Koordinatenpunkten dargestellt. Die vom ersten Koppeltrieb 30 erzeugte Oszillationsbewegung der Werkzeugspindel 18 ist durch die Linie 70 dargestellt. Im vorliegenden Fall erfolgt die Rotation der Hohlwelle 40 mit der doppelten Drehzahl (f₂) (min⁻¹) wie die Frequenz der Oszillationsbewegung (f₁) (min⁻¹) der Werkzeugspindel 18. Das Verhältnis u=f₁/f₂ beträgt demnach 0,5. In Fig. 5 ist die Bewegung der Spitze eines mittleren Zahns durch die Linien 74 mit den entsprechenden Koordinatenpunkten dargestellt. 74 zeigt also die aus der Oszillationsbewegung gemäß Ziffer 70 der rotierenden Bewegung gemäß Ziffer 72 und der durch den Anwender aufgebrachten Vorschubbewegung resultierende Bewegung.

Hierbei ist das Werkzeug 20 derart am Oszillationsantrieb 12 eingespannt, dass die Längsachse des Werkzeugs 20 gemäß Fig. 1 in Richtung der Längsachse 13 des Oszillationsantriebs 12 verläuft. Der Oszillationsantrieb 12 befindet sich oberhalb, der Schnittvorschub erfolgt gemäß Fig. 5 nach unten. Im dargestellten Fall ergibt sich eine Bewegung des Sägezahns in Form einer liegenden acht.

Je nachdem, in welchem Winkel das Werkzeug 20 am Oszillationsantrieb 12 eingespannt wird, ändert sich die Bewegungsform, aber das Prinzip bleibt erhalten.

Fig. 6 zeigt die resultierende Bewegung 74 bei sonst gleichen Parametern, wenn das Sägeblatt um 90° verdreht eingespannt ist. Die Längsachse des Werkzeugs 20 befindet sich somit senkrecht zur Längsachse 13 des Oszillationsantriebs 12 gemäß Fig. 1. Dies bedeutet, dass die Verzahnung 21 etwa in Längsrichtung der Längsachse 13 des Oszillationsantriebs 12 verläuft. Bei der Darstellung gemäß Fig. 6 befindet sich der Oszillationsantrieb 12 oben, der Vorschub verläuft wiederum nach unten.

Fig. 7 zeigt ein Übersetzungsverhältnis ist u=f₁/f₂ mit 0,8 Rotationen und einer Oszillation. In diesem Fall ist u=f₁/f₂=1/0,8=1,25. Hierbei macht der Zahn viele Leerdurchläufe in der Luft, bevor er wieder ins Material eintaucht. Dies kann allerdings durchaus vorteilhaft sein, wenn ein Tauchschnitt betrachtet wird, da hierdurch die Spanabfuhr verbessert wird.

Das Übersetzungsverhältnis u und auch die zugehörige Amplitude können in weiten Grenzen variiert werden. Grundsätzlich lässt sich festhalten, dass je langsamer die Exzenterbewegung der Hohlwelle 40 (aufgeprägte Rotationsbewegung) im Vergleich zur Oszillationsbewegung der Werkzeugspindel 18 ist, desto weniger ausgeprägt ist die Bewegung des Werkzeugs 20 in einer zur Schneide 21 senkrecht verlaufenden Richtung, so dass eine Freischneidwirkung bei einem Tauchschnitt geringer ausfällt. Ist der Kehrwert von u, also das Verhältnis 1/u abweichend von einem ganzzahligen Wert, umso eher wird ein Zahn durch die Luft laufen und nur gelegentlich schneiden.

Anhand der Fig. 8 und 9 sei die Auswirkung bei der Verwendung eines Oszillationsantriebs 17a gemäß Fig. 3 auf das Schneidverhalten eines Werkzeugs 20 bei einem Tauchschnitt näher erläutert.

Fig. 8 zeigt das Schneidverhalten eines Werkzeugs 20 in Form eines Tauchsägeblattes gemäß Fig. 1. Das Sägeblatt 20 ist hierbei mit seiner Längsachse 80 in Richtung der Längsachse 13 des Oszillationsantriebs 12 eingespannt. Es besitzt zwei zueinander parallele Seitenkanten 96, 98 und ein zur Längsachse 80 senkrecht verlaufende Verzahnung 21, die geradlinig verläuft. An den beiden Enden gehen die Seitenkanten 96, 98 des Werkzeugs 20 über winkelige Abschnitte 99, 100, die sich von den zueinander parallelen, geraden Seitenkanten 96, 98 nach außen aufweiten, in die gerade Schneide 21 über.

Bei einer gegenüber der Einspannung gemäß Fig. 8 senkrechten Einspannlage des Werkzeugs 20 (um 90° nach rechts verdreht oder um 90° nach links verdreht) ergeben sich gänzlich andere Verhältnisse.

Fig. 8a) zeigt die Einspannlage des Werkzeugs 20, Fig. 8b) zeigt zusätzlich den Angriff des Werkzeugs 20 bei einem Tauchschnitt in einem Werkstück 82.

Bei dem Werkstück 20 kann es sich beispielsweise um ein Hartholz handeln. Mit 88 ist die Bewegungskurve eines mittleren Sägezahns angedeutet, die sich bei einer Verwendung des Oszillationsgetriebes 17a gemäß Fig. 3 bei 0° Einspannlage ergibt.

Die Verzahnung 21 ist nun vorteilhaft derart gestaltet, dass die beiden äußeren Eckzähne 84 und 86 der Verzahnung 21 in beiden Raumrichtungen schneiden, also sowohl in einer Bewegung in der Darstellung gemäß Fig. 8b) nach links und rechts, als auch bei einer Bewegung in Vorschubrichtung.

Fig. 9 zeigt die verschiedenen Phasen eines halben Schneidzyklus bei Einspannung im Winkel von 0° gemäß Fig. 8a) bzw. b). Bewegt sich das Sägeblatt nach links, wie durch den Pfeil 91 angedeutet, so ergibt sich ein Span 90 gemäß Fig. 9I. Der Eckzahn 86 wirkt also wie ein Hobel.

Fig. 9II zeigt das Abheben des Eckzahns 86 in einer nachfolgenden Phase gemäß dem Pfeil 92. Fig. 9III zeigt die Bewegung nach unten in Richtung des Pfeils 93, wobei wiederum ein Span 94 abgehobelt wird. Dies setzt sich fort in der Bewegung nach rechts gemäß Fig. 9IV entsprechend des Pfeiles 95.

Die Verzahnung 21 kann, wie hier dargestellt, für einen Schnitt mit Vorzugsrichtung ausgestaltet sein, gegebenenfalls jedoch auch als symmetrische Verzahnung ohne Vorzugsrichtung ausgestaltet sein.

In jedem Falle sind die beiden Eckzähne 84, 86 derart beidseitig angeschliffen, dass sie in beiden Richtungen ein Schneiden erlauben.

## Patentansprüche

1. Oszillationsantrieb mit einem Gehäuse (14), in dem ein Antriebsmotor (26) zum rotierenden Antrieb einer Motorwelle (28) und eine Werkzeugspindel (18) aufgenommen sind, sowie ein erster Koppeltrieb (30), der mit der Motorwelle (28) und der Werkzeugspindel (18) zum oszillierenden Antrieb der Werkzeugspindel (18) um ihre Längsachse (19) gekoppelt ist, sowie ein zweiter Koppeltrieb (38), der mit der Werkzeugspindel gekoppelt ist, **dadurch gekennzeichnet, dass** der zweite Koppeltrieb (38) derart ausgebildet ist, dass die Werkzeugspindel (18) eine Überlagerungsbewegung aus oszillierender und senkrecht zur Längsachse (19) gerichteter Bewegung ausführt, wobei vorzugsweise eine Schalteinrichtung (23) zur wahlweisen Zuschaltung des zweiten Koppeltriebs (38) vorgesehen ist, und dass die Werkzeugspindel (18) zur Befestigung eines Werkzeugs (20) ausgebildet ist.

2. Oszillationsantrieb nach Anspruch 1, **dadurch gekennzeichnet, dass** der zweite Koppeltrieb (38) derart mit der Werkzeugspindel (18) gekoppelt ist, dass die Werkzeugspindel (18) in einer zu ihrer Längsachse (19) senkrechten Ebene periodisch verlagerbar ist.

3. Oszillationsantrieb nach Anspruch 1 oder 2, **dadurch gekennzeichnet, dass** der zweite Koppeltrieb (38) dazu ausgebildet ist, die Werkzeugspindel (18) in der zu ihrer Längsachse (19) senkrechten Ebene exzentrisch um eine Mittelachse (46) herum zu verlagern.

4. Oszillationsantrieb nach Anspruch 3, **dadurch gekennzeichnet, dass** die Werkzeugspindel (18) in einer Hohlwelle (40) gelagert ist, die über einen Exzenter rotierend antreibbar ist.

5. Oszillationsantrieb nach Anspruch 4, **dadurch gekennzeichnet, dass** die Werkzeugspindel (18) in einer Hohlwelle (40) drehbar gelagert ist, die einen Exzenterring (41) aufweist, innerhalb dessen die Werkzeugspindel (18) drehbar gelagert ist, und dessen bezüglich der Werkzeugspindel (18) exzentrisch verlaufende Außenoberfläche in Lagern (44) am Gehäuse (14) drehbar gelagert ist.

6. Oszillationsantrieb nach einem der Ansprüche 4 oder 5, **dadurch gekennzeichnet, dass** die Hohlwelle (40) mittels eines Riementriebes (49, 50) von der Motorwelle (18) antreibbar ist.

7. Oszillationsantrieb nach Anspruch 1 oder 2, **dadurch gekennzeichnet, dass** der zweite Koppeltrieb (38) dazu ausgebildet ist, die Werkzeugspindel (18) bezüglich einer zur Werkzeugspindel (18) parallelen Schwenkachse (53) oszillierend zu verschwenken, wobei die Werkzeugspindel (18) vorzugsweise an einem Schwenkhebel (54) gelagert ist, der um eine gehäusefeste Schwenkachse (53) oszillierend verschwenkbar ist.

8. Oszillationsantrieb nach Anspruch 7, **dadurch gekennzeichnet, dass** der Schwenkhebel (54) an seinem der Werkzeugspindel (18) abgewandten Ende (55) mittels eines Nockentriebs (58, 59, 60) von der Motorwelle (28) oszillierend angetrieben ist.

9. Oszillationsantrieb nach Anspruch 8, **dadurch gekennzeichnet, dass** der Schwenkhebel (54) über einen von der Motorwelle (28) angetriebenen Nocken (58) bewegt wird, wobei eine Rückstellfeder (62) zur Rückstellung des Schwenkhebels (54) in Gegenrichtung vorgesehen ist, oder dass der Schwenkhebel (54) über einen von der Motorwelle (28) angetriebenen Exzenterkoppeltrieb angetrieben ist.

10. Oszillationsantrieb nach Anspruch 1 oder 2, **dadurch gekennzeichnet, dass** der zweite Koppeltrieb (38) dazu ausgebildet ist, die Werkzeugspindel (18) in einer zu ihrer Längsachse senkrechten Ebene translatorisch in einer Richtung hin und her zu bewegen.

11. Oszillationsantrieb nach einem der vorhergehenden Ansprüche, **dadurch gekennzeichnet, dass** mindestens ein Aktuator (64, 65, 66, 67) zum Antrieb des zweiten Koppeltriebs (38) vorgesehen ist, wobei vorzugsweise mindestens ein Aktuator (64, 65, 66, 67) zur translatorischen Verlagerung der Werkzeugspindel (18) in einer ersten Richtung und mindestens ein weiterer Aktuator zur translatorischen Verlagerung der Werkzeugspindel (18) in einer zweiten Richtung vorgesehen ist, die von der ersten Richtung abweicht, und wobei vorzugsweise der mindestens eine Aktuator (64-67) mittels eines Piezoelementes, Nanotubelementes oder eines Fluidelementes antreibbar ist.

12. Oszillationsantrieb nach einem der vorhergehenden Ansprüche, **dadurch gekennzeichnet, dass** der erste Koppeltrieb (30) mit einer ersten Frequenz (f₁) und der zweite Koppeltrieb (38) mit einer zweiten Frequenz (f₂) angetrieben ist, und wobei das Verhältnis (u) zwischen der ersten Frequenz (f₁) und der zweiten Frequenz (f₂) u=f₁/f₂ in einem Bereich von 0,01≤u≤100 liegt, vorzugsweise in einem Bereich von 0,1≤u≤10, weiter bevorzugt in einem Bereich von 0,5≤u≤4, besonders bevorzugt in einem Bereich von 0,5≤u≤1,5.

13. Oszillationsantrieb nach einem der vorhergehenden Ansprüche, **dadurch gekennzeichnet, dass** ein Verhältnis (v) zwischen einer Amplitude (a₁) der Oszillationsbewegung des ersten Koppeltriebs (30) und einer Amplitude (a₂) einer Oszillationsbewegung des zweiten Koppeltriebs (38) (jeweils gemessen an der Werkzeugschneide) v= a₁/a₂ in einem Bereich von 0,1≤v≤10 liegt.

14. Oszillationsantrieb nach Anspruch 12 oder 13, **dadurch gekennzeichnet, dass** zumindest das Verhältnis (u) zwischen der ersten Frequenz (f₁) und der zweiten Frequenz (f₂), oder das Verhältnis (v) zwischen einer Amplitude (a₁) der Oszillationsbewegung des ersten Koppeltriebs (30) und einer Amplitude (a₂) der Oszillationsbewegung des zweiten Koppeltriebs (38), oder eine Phasenlage (ϕ) zwischen den beiden Koppeltrieben (30, 38) einstellbar ist.

15. Oszillationsantrieb nach einem der vorhergehenden Ansprüche, **dadurch gekennzeichnet, dass** der erste Koppeltrieb (30) als Exzenterkoppeltrieb ausgebildet ist, mit einem von der Motorwelle (28) angetriebenen Exzenter (32), der über eine Exzenterlager (34) und einen Schwenkhebel (54) mit der Werkzeugspindel (18) zu deren oszillierendem Antrieb gekoppelt ist.

## Claims

1. Oscillating drive with a housing (14), in which a drive motor (26) for the rotating drive of a motor shaft (28) and a tool spindle (18) are accommodated, as well as a first coupling drive (30), which is coupled to the motor shaft (28) and to the tool spindle (18) for the oscillating drive of the tool spindle (18) about its longitudinal axis (19), and also a second coupling drive (38), which is coupled to the tool spindle, **characterised in that** the second coupling drive (38) is designed so that the tool spindle (18) executes a superimposed movement consisting of an oscillating movement and a movement directed vertically with respect to the longitudinal axis (19), wherein preferably a switching mechanism (23) is provided for the optional selection of the second coupling drive (38), and that the tool spindle (18) is designed for the securement of a tool (20).

2. Oscillating drive according to claim 1, **characterised in that** the second coupling drive (38) is coupled to the tool spindle (18) in such a way that the tool spindle (18) can be periodically displaced in a plane perpendicular to its longitudinal axis (19).

3. Oscillating drive according to claim 1 or 2, **characterised in that** the second coupling drive (38) is designed to displace the tool spindle (18) eccentrically about a central axis (46) in the plane perpendicular to its longitudinal axis (19).

4. Oscillating drive according to claim 3, **characterised in that** the tool spindle (18) is mounted in a hollow shaft (40), which can be rotationally driven via an eccentric.

5. Oscillating drive according to claim 4, **characterised in that** the tool spindle is rotationally mounted in a hollow shaft (40), which has an eccentric ring (41) within which the tool spindle (18) is rotationally mounted, and whose external surface extending eccentrically with respect to the tool spindle (18) is rotationally mounted in bearings (44) on the housing (14).

6. Oscillating drive according to any one of claims 4 or 5, **characterised in that** the hollow shaft (40) can be driven by means of a belt drive (49, 50) from the motor shaft (18).

7. Oscillating drive according to claim 1 or 2, **characterised in that** the second coupling drive (38) is designed so as to swivel the tool spindle (18) in an oscillating manner with respect to a swivel axis (53) parallel to the tool spindle (18), wherein the tool spindle (18) is preferably mounted on a swivel lever (54), which can swivel in an oscillating manner about a fixed swivel axis (53).

8. Oscillating drive according to claim 7, **characterised in that** the swivel lever (54) is driven in an oscillating manner from the motor shaft (28) at its end (55) remote from the tool spindle (18) by means of a cam drive (58, 59, 60).

9. Oscillating drive according to claim 8, **characterised in that** the swivel lever (54) is moved via a cam (58) driven by the motor shaft (28), wherein a restoring spring (62) is provided in order to reset the swivel lever (54) in the opposite direction, or that the swivel lever (54) is driven via an eccentric coupling drive from the motor shaft (28).

10. Oscillating drive according to claim 1 or 2, **characterised in that** the second coupling drive (38) is designed to move the tool spindle (18) translationally in a reciprocating manner in a plane perpendicular to its longitudinal axis.

11. Oscillating drive according to any one of the preceding claims, **characterised in that** at least one actuator (64, 65, 66, 67) is provided to drive the second coupling drive (38), wherein preferably at least one actuator (64, 65, 66, 67) is provided for the translational displacement of the tool spindle (18) in a first direction and at least one further actuator is provided for the translational displacement of the tool spindle (18) in a second direction, which differs from the first direction, and wherein preferably the at least one actuator (64-67) can be driven by means of a piezo element, nanotube element or a fluid element.

12. Oscillating drive according to any one of the preceding claims, **characterised in that** the first coupling drive (30) is driven with a first frequency (f₁) and the second coupling drive (38) is driven with a second frequency (f₂), and wherein the ratio (u) between the first frequency (f₁) and the second frequency (f₂) u=f₁/f₂ is in a range of 0.01≤u≤100, preferably in a range of 0.1≤u≤10, more preferably in a range of 0.5≤u≤4, particularly preferably in a range of 0.5≤u≤1.5.

13. Oscillating drive according to any one of the preceding claims, **characterised in that** a ratio (v) between an amplitude (a₁) of the oscillating movement of the first coupling drive (30) and an amplitude (a₂) of an oscillating movement of the second coupling drive (38) (in each case measured at the tool blade) v=a₁/a₂ is in a range of 0.1≤v≤10.

14. Oscillating drive according to claim 12 or 13, **characterised in that** at least the ratio (u) between the first frequency (f₁) and the second frequency (f₂), or the ratio (v) between an amplitude (a₁) of the oscillating movement of the first coupling drive (30) and an amplitude (a₂) of the oscillating movement of the second coupling drive (38), or a phase relation (ϕ) between the two coupling drives (30, 38), can be adjusted.

15. Oscillating drive according to any one of the preceding claims, **characterised in that** the first coupling drive (30) is designed as an eccentric coupling drive, with an eccentric (32) driven by the motor shaft (28), which is coupled via an eccentric bearing (34) and a swivel lever (54) to the tool spindle (18) for its oscillating drive.

## Revendications

1. Commande par oscillation avec un carter (14), dans lequel un moteur d'entraînement (26) pour l'entraînement rotatif d'un arbre moteur (28) et une broche d'outil (18) sont reçus, ainsi qu'un premier mécanisme de couplage (30), qui est couplé à l'arbre moteur (28) et à la broche d'outil (18) pour l'entraînement oscillant de la broche d'outil (18) autour de son axe longitudinal (19), ainsi qu'un deuxième mécanisme de couplage (38), qui est couplé à la broche d'outil, **caractérisée en ce que** le deuxième mécanisme de couplage (38) est réalisé de telle sorte que la broche d'outil (18) réalise un mouvement de superposition formé d'un mouvement oscillant et dirigé perpendiculairement à l'axe longitudinal (19), dans laquelle de préférence un dispositif de commutation (23) est prévu pour l'activation sélective du deuxième mécanisme de couplage (38), et que la broche d'outil (18) est réalisée pour la fixation d'un outil (20).

2. Commande par oscillation selon la revendication 1, **caractérisée en ce que** le deuxième mécanisme de couplage (38) est couplé à la broche d'outil (18) de telle sorte que la broche d'outil (18) est déplaçable périodiquement dans un plan perpendiculaire à son axe longitudinal (19).

3. Commande par oscillation selon la revendication 1 ou 2, **caractérisée en ce que** le deuxième mécanisme de couplage (38) est réalisé pour déplacer la broche d'outil (18) dans le plan perpendiculaire à son axe longitudinal (19) de manière excentrique autour d'un axe médian (46).

4. Commande par oscillation selon la revendication 3, **caractérisée en ce que** la broche d'outil (18) est logée dans un arbre creux (40), qui peut être entraîné par rotation via un excentrique.

5. Commande par oscillation selon la revendication 4, **caractérisée en ce que** la broche d'outil (18) est logée de manière rotative dans un arbre creux (40), qui présente une bague excentrique (41), à l'intérieur de laquelle la broche d'outil (18) est logée de manière rotative, et dont la surface extérieure s'étendant de manière excentrique par rapport à la broche d'outil (18) est logée de manière rotative dans des paliers (44) au niveau du carter (14).

6. Commande par oscillation selon l'une quelconque des revendications 4 ou 5, **caractérisée en ce que** l'arbre creux (40) peut être entraîné par l'arbre moteur (18) au moyen d'un entraînement par courroie (49, 50).

7. Commande par oscillation selon la revendication 1 ou 2, **caractérisée en ce que** le deuxième mécanisme de couplage (38) est réalisé pour faire pivoter de manière oscillante la broche d'outil (18) par rapport à un axe de pivotement (53) parallèle à la broche d'outil (18), dans laquelle la broche d'outil (18) est logée de préférence au niveau d'un levier de pivotement (54), qui peut être pivoté de manière oscillante autour d'un axe de pivotement (53) solidaire du carter.

8. Commande par oscillation selon la revendication 7, **caractérisée en ce que** le levier de pivotement (54) est entraîné de manière oscillante au niveau de son extrémité (55) opposée à la broche d'outil (18) par l'arbre moteur (28) au moyen d'un mécanisme à cames (58, 59, 60).

9. Commande par oscillation selon la revendication 8, **caractérisée en ce que** le levier de pivotement (54) est déplacé par le biais d'une came (58) entraînée par l'arbre moteur (28), dans laquelle un ressort de rappel (62) est prévu pour le rappel du levier pivotant (54) dans la direction opposée, ou que le levier pivotant (54) est entraîné par le biais d'un mécanisme de couplage excentrique entraîné par l'arbre moteur (28).

10. Commande par oscillation selon la revendication 1 ou 2, **caractérisée en ce que** le deuxième mécanisme de couplage (38) est réalisé pour déplacer par translation dans une direction en va-et-vient la broche d'outil (18) dans un plan perpendiculaire à son axe longitudinal.

11. Commande par oscillation selon l'une quelconque des revendications précédentes, **caractérisée en ce qu'**au moins un actionneur (64, 65, 66, 67) est prévu pour l'entraînement du deuxième mécanisme de couplage (38), dans laquelle de préférence au moins un actionneur (64, 65, 66, 67) est prévu pour le déplacement par translation de la broche d'outil (18) dans une première direction et au moins un autre actionneur est prévue pour le déplacement par translation de la broche d'outil (18) dans une deuxième direction, qui diverge de la première direction, et dans laquelle de préférence l'au moins un actionneur (64-67) peut être entraîné au moyen d'un élément piézo, d'un élément de nanotube ou d'un élément de fluide.

12. Commande par oscillation selon l'une quelconque des revendications précédentes, **caractérisée en ce que** le premier mécanisme de couplage (30) est entraîné avec une première fréquence (f₁) et le deuxième mécanisme de couplage (38) est entraîné avec une deuxième fréquence (f₂), et dans laquelle le rapport (u) entre la première fréquence (f₁) et la deuxième fréquence (f₂) u = f₁/f₂ est dans une plage de 0,01≤u≤100, de préférence dans une plage de 0,1≤u≤10, de manière davantage préférée dans une plage de 0,5≤u≤4, le plus de préférence dans une plage de 0,5≤u≤1,5.

13. Commande par oscillation selon l'une quelconque des revendications précédentes, **caractérisée en ce qu'**un rapport (v) entre une amplitude (a₁) du mouvement d'oscillation du premier mécanisme de couplage (30) et une amplitude (a₂) d'un mouvement d'oscillation du deuxième mécanisme de couplage (38) (mesurée respectivement au niveau d'un tranchant d'outil) v = a₁/a₂ est dans une plage de 0,1≤v≤10.

14. Commande par oscillation selon la revendication 12 ou 13, **caractérisée en ce qu'**au moins le rapport (u) entre la première fréquence (f₁) et la deuxième fréquence (f₂), ou le rapport (v) entre une amplitude (a₁) du mouvement d'oscillation du premier mécanisme de couplage (30) et une amplitude (a₂) du mouvement d'oscillation du deuxième mécanisme de couplage (38), ou une position de phase (ϕ) est réglable entre les deux mécanismes de couplage (30, 38).

15. Commande par oscillation selon l'une quelconque des revendications précédentes, **caractérisée en ce que** le premier mécanisme de couplage (30) est réalisé en tant que mécanisme de couplage excentrique, avec un excentrique (32) entraîné par l'arbre moteur (28), qui est couplé à la broche d'outil (18) via un palier excentrique (34) et un levier de pivotement (54) pour son entraînement oscillant.
